# EUROPÄISCHE PATENTANMELDUNG

(11) **EP 2 532 221 A1**
(43) Veröffentlichungstag der Anmeldung: **12.12.2012**
(21) Anmeldenummer: 12171374.7
(22) Anmeldetag: 08.06.2012
(51) Int. Cl.: A01D 34/66, A01D 75/30

(54) **Mähdeck**

(30) Priorität: 10.06.2011 DE 102011103957; 03.08.2011 DE 102011080385
(71) Anmelder: Wiedenmann GmbH, 89192 Rammingen (DE)
(72) Erfinder:
(74) Vertreter: Flügel Preissner Kastel Schober

(57) **Zusammenfassung**

Die Erfindung betrifft ein Mähdeck (10) mit einer ersten Mäheinheit (12) und einer zweiten Mäheinheit (14), wobei die zweite Mäheinheit (14) an der ersten Mäheinheit (12) mittels einer Doppelgelenkanordnung (16) hochklappbar befestigt ist.

## Beschreibung

Die Erfindung betrifft ein Mähdeck.

In der Praxis werden Mähdecks an Fahrzeuge, wie z.B. Traktoren, angebaut, so dass die mit Mähdeck versehenen Traktoren als selbstfahrende Rasenmäher zu benutzen sind. Es gibt unterschiedlich große Mähdecks für unterschiedlich leistungsfähige Traktoren oder sonstige Fahrzeuge. Mähdecks sind in der Regel mit einem oder mehreren rotierenden Schneidmessern versehen, wie dies gut bei Rasenmähern bekannt ist. Die Schneidmesser rotieren in einer Messerebene, um die Grashalme entsprechend zu kürzen.

Ein Beispiel für ein bekanntes Mähdeck ist in der DE 10 2005 050 215 A1 beschrieben.

Grundsätzlich werden unter Mähdecks Mähgeräte verstanden, welche zum Mähen größerer Flächen geeignet sind und hierzu eine Mehrzahl von nebeneinander angeordneten Schneidmessern aufweisen.

Die Leistungsfähigkeit der Mähdecks wird dabei in der Regel durch die Mähdeckbreite bestimmt. Mit breiten Mähdecks kann man in einem Arbeitsgang eine breitere Fläche mähen, so dass insgesamt für eine gegebene Fläche eine geringere Mähzeit anzusetzen ist als bei schmäleren Mähdecks.

Problematisch bei breiten Mähdecks ist jedoch, dass diese bei Transportfahrten sehr hinderlich sind. Oft sind Zufahrten zu Rasenflächen in der Breite beschränkt, so dass mit sehr breiten Mähdecks versehene Fahrzeuge solche Zufahrten nicht passieren könnten.

Eine andere Schwierigkeit bei sehr breiten Mähdecks ist, dass sich diese schlecht an Bodengegebenheiten anpassen lassen. Ein starres breites Mähdeck kann nur eine Schnittebene bereitstellen, was bei stärkeren Bodenkrümmungen nachteilig ist.

Aufgabe der Erfindung ist es daher, ein Mähdeck zu schaffen, das eine geringere Transportbreite und eine größere Arbeitsbreite zur Verfügung stellt und zudem besser als bei bisher bekannten Mähdecks mit variabler Breite an Bodenunebenheiten anpassbar ist.

Diese Aufgabe wird durch ein Mähdeck mit den Merkmalen des Anspruches 1 gelöst.

Vorteilhafte Ausgestaltungen der Erfindung sind Gegenstand der Unteransprüche.

Die Erfindung schafft ein Mähdeck mit einer ersten Mäheinheit und einer zweiten Mäheinheit, wobei die zweite Mäheinheit an der ersten Mäheinheit mittels einer Doppelgelenkanordnung hochklappbar befestigt ist.

Durch das Vorsehen zweier zueinander abklappbarer Mäheinheiten lässt sich eine breite Schnittbreite und eine geringere Transportbreite schaffen. Durch die Anbindung mittels einer Doppelgelenkanordnung lässt sich aufgrund der unterschiedlichen Schwenkmöglichkeiten, die durch ein solches Doppelgelenk gegeben sind, eine höchst variable Bodenanpassung erreichen.

Beispielsweise lässt sich die zweite Mäheinheit um wenigstens zwei Schwenkachsen relativ zu der ersten Mäheinheit verschwenken. Hierdurch lässt sich vorteilhaft das Mähdeck z.B. um eine untere Schwenkachse nach unten schwenken und z.B. um eine obere Schwenkachse nach oben schwenken, so dass die Schneidebene der zweiten Mäheinheit optimal am Boden verbleibt.

Die Mäheinheiten können beispielsweise mit jeweils eigenen Rolleinrichtungen versehen sein, um die Mäheinheiten gegenüber dem Boden abzustützen, so dass bei Bodenunebenheiten über das Abrollen Klappbewegungen durchgeführt werden können.

Der Begriff "Doppelgelenkanordnung" ist dabei nicht einschränkend zu versehen, dass nur Gelenkanordnungen mit maximal zwei Gelenken darunterfallen können; vielmehr wird der Begriff so verstanden, dass beispielsweise eine Dreifachgelenkanordnung mit drei Schwenkachsen auch eine Doppelgelenkanordnung umfasst, zu der noch eine weitere Schwenkachse hinzugefügt wird.

Somit sind also auch Mähdecks mit Mäheinheiten, die um mehr als zwei Schwenkachsen zueinander verschwenkbar sind, von der Erfindung umfasst.

Bei einer bevorzugten Ausgestaltung ist vorgesehen, dass die erste Mäheinheit ein erstes Mähgehäuse mit einer Fahrzeuganlenkungseinrichtung zur Befestigung an einem Fahrzeug aufweist, wobei die zweite Mäheinheit ein zweites Mähgehäuse aufweist, das mittels der Doppelgelenkanordnung abklappbar an dem ersten Mähgehäuse angelenkt ist.

Vorzugsweise ist vorgesehen, dass eine Antriebseinrichtung des Mähdecks ein Zugmittelgetriebe zum Antreiben der zweiten Mäheinheit aufweist, das sich von der ersten Mäheinheit zu der zweiten Mäheinheit erstreckt.

Es ist bevorzugt, dass die Doppelgelenkanordnung eine obere Scharniergelenkanordnung zum Verschwenken der zweiten Mäheinheit relativ zu der ersten Mäheinheit um eine obere, vorzugsweise in einer horizontalen Richtung verlaufenden, Schwenkachse und eine untere Scharniergelenkanordnung zum Verschwenken der zweiten Mäheinheit relativ zu der ersten Mäheinheit um eine untere, vorzugsweise in einer horizontalen Richtung verlaufende, Schwenkachse aufweist, wobei die Schwenkachsen im Wesentlichen parallel verlaufen, wobei ein erster Anschlag zum Begrenzen der Verschwenkbewegung um die obere Schwenkachse in einer ersten Schwenkrichtung und ein zweiter Anschlag zum Verschwenken der Verschwenkbewegung um die untere Schwenkachse in einer zu der ersten Schwenkrichtung entgegengerichteten zweiten Schwenkrichtung vorgesehen sind.

Gemäß einer weiteren vorteilhaften Ausgestaltung der Erfindung ist vorgesehen, dass die Doppelgelenkanordnung durch eine Vorspanneinrichtung in Anlage gegen wenigstens einen der Anschläge, vorzugsweise in Anlage gegen den ersten Anschlag, vorgespannt ist.

Vorzugsweise ist vorgesehen, dass die Doppelgelenkanordnung mehrere in Schwenkachsrichtung gesehen mit Abstand zueinander angeordnete Doppelgelenke aufweist, die jeweils mit einem oberen und einem unteren Scharniergelenk versehen sind, so dass die Mehrzahl der Scharniergelenke die jeweilige Scharniergelenkanordnung bilden, wobei die Scharniergelenke jedes Doppelgelenks jeweils durch einen Lenker verbunden sind.

Es ist bevorzugt, dass die erste Mäheinheit wenigstens um eine erste Hochachse drehbar gelagertes erstes Schneidmesser aufweist und dass die zweite Mäheinheit wenigstens ein um eine zweite Hochachse drehbar gelagertes zweites Schneidmesser aufweist, wobei die Schneidmesser im Wesentlichen in einer gemeinsamen Schneidebene rotieren, wobei eine untere Schwenkachse der Doppelgelenkanordnung in der oder im Nahbereich der Schneidebene angeordnet ist.

Bei einer bevorzugten Ausgestaltung ist vorgesehen, dass die Mähgehäuse jeweils eine obere Gehäusewand zum oberen Abschließen von Mähkammern aufweisen, wobei eine im Wesentlichen parallel zur unteren Schwenkachse verlaufende obere Schwenkachse der Doppelgelenkanordnung sich auf Höhe der oberen Gehäusewand oder oberhalb der oberen Gehäusewand erstreckt.

Es ist bevorzugt, dass die Doppelgelenkanordnung zwei Schwenkachsen definiert, die sowohl in Höhenrichtung des Mähdecks als auch in einer quer zu den Schwenkachsen verlaufenden seitlichen Richtung versetzt zueinander angeordnet sind, wobei die Schwenkachsen in Höhenrichtung des Mähdecks weiter voneinander entfernt sind als in der seitlichen Richtung.

Gemäß einer weiteren vorteilhaften Ausgestaltung der Erfindung ist vorgesehen, dass die erste Mäheinheit ein mittleres Mähdeckelement mit einer Mehrzahl von rotierenden ersten Schneidmessern ist,
dass an zwei gegenüberliegenden Seiten des mittleren Mähdeckelements jeweils eine zweite Mäheinheit hochklappbar an dem mittleren Mähdeckelement angebracht ist.

Vorzugsweise ist vorgesehen, dass oberhalb der Doppelgelenkanordnung ein Betätigungselement zur Betätigung einer Klappbewegung zwischen den Mäheinheiten angreift, das eine an der ersten Mäheinheit angreifende erste Anlenkung und eine an der zweiten Mäheinheit angreifende zweite Anlenkung und eine Verlagerungseinrichtung zur vorzugsweise angetriebenen Relativverlagerung der Anlenkungen aufweist, wobei das Betätigungselement bzw. die Verlagerungseinrichtung vorzugsweise als Teleskoparm oder Teleskopzylinder ausgebildet ist.

Bevorzugt ist, dass die erste Mäheinheit einen an einen Nebenantrieb eines Fahrzeugs, an das das Mähdeck anzuschließen ist, anschließbaren ersten Antrieb aufweist und dass die zweite Mäheinheit einen mittels einer schaltbaren Kupplung an den ersten Antrieb anzukuppelnden zweiten Antrieb aufweist.

Bei einer weiteren vorteilhaften Ausgestaltung der Erfindung ist vorgesehen, dass die zweite Mäheinheit mittels eines Zugmittelgetriebes angetrieben ist, welches ein an der ersten Mäheinheit angeordnetes Antriebsrad und ein an der zweiten Mäheinheit angeordnetes Abtriebsrad aufweist, wobei wenigstens ein Trum des Zugmittels des Zugmittelgetriebes auf Höhe einer Schwenkachse des Doppelgelenks geführt ist.

Vorzugsweise ist vorgesehen, dass das wenigstens eine Trum die obere Schwenkachse des Doppelgelenks schräg kreuzt, so dass eine Richtungskomponente des Trums und der Schwenkachse zusammenfällt.

Bevorzugt ist, dass sowohl ein Lasttrum als auch ein Leertrum des Zugmittelgetriebes durch in Schwenkachsrichtung jeweils versetzt zueinander angeordnete Umlenkrollen auf Höhe der Schwenkachse, schräg zu dieser verlaufend über die Trennstelle zwischen erster und zweiter Mäheinheit geführt sind.

Ein Ausführungsbeispiel der Erfindung wird nachfolgend anhand der beigefügten Zeichnungen näher erläutert. Darin zeigt:
- Fig. 1: eine Unteransicht auf ein Ausführungsbeispiel für ein Mähdeck mit mehreren durch Doppelgelenkanordnungen zueinander abklappbar aneinander befestigten Mäheinheiten;
- Fig. 2: eine schematische perspektivische Ansicht des Mähdecks mit einem angedeuteten Fahrzeug, an welchem das Mähdeck angehängt ist;
- Fig. 3: eine perspektivische Draufsicht von vorne, der Seite und von oben gesehen auf das Mähdeck, wobei eine Abdeckung über eine Antriebseinrichtung entfernt worden ist;
- Fig. 4: eine vordere Ansicht des Gelenkbereichs zwischen zwei Mäheinheiten des Mähdecks in einer ersten Stellung;
- Fig. 5: eine perspektivische Darstellung des Gelenkbereichs von Fig. 4 in der ersten Stellung;
- Fig. 6: eine weitere perspektivische Darstellung des Gelenkbereiches in der ersten Stellung;
- Fig. 7: noch eine weitere perspektivische Darstellung des Gelenkbereiches in der ersten Stellung;
- Fig. 8: eine vordere Ansicht des Gelenkbereiches in einer zweiten Stellung, in der eine seitliche zweite Mäheinheit gegenüber einer mittleren ersten Mäheinheit einer Bodenunebenheit folgend etwas nach unten geklappt ist;
- Fig. 9: eine perspektivische Darstellung dieser zweiten Position des Gelenkbereichs von Fig. 8;
- Fig. 10: den Gelenkbereich zwischen den Mäheinheiten in einer dritten Stellung, bei der die zweite Mäheinheit gegenüber der ersten Mäheinheit einer Bodenunebenheit folgend etwas nach oben geklappt ist;
- Fig. 11: eine perspektivische Darstellung der dritten Stellung gemäß Fig. 10;
- Fig. 12: eine vordere Ansicht des Gelenkbereiches zwischen den Mäheinheiten in einer Transportstellung, wobei die zweite Mäheinheit relativ zu der ersten Mäheinheit ganz nach oben geklappt ist;
- Fig. 13: eine erste perspektivische Ansicht des Gelenkbereiches in der Transportstellung; und
- Fig. 14: eine zweite perspektivische Ansicht des Gelenkbereiches in der Transportstellung.

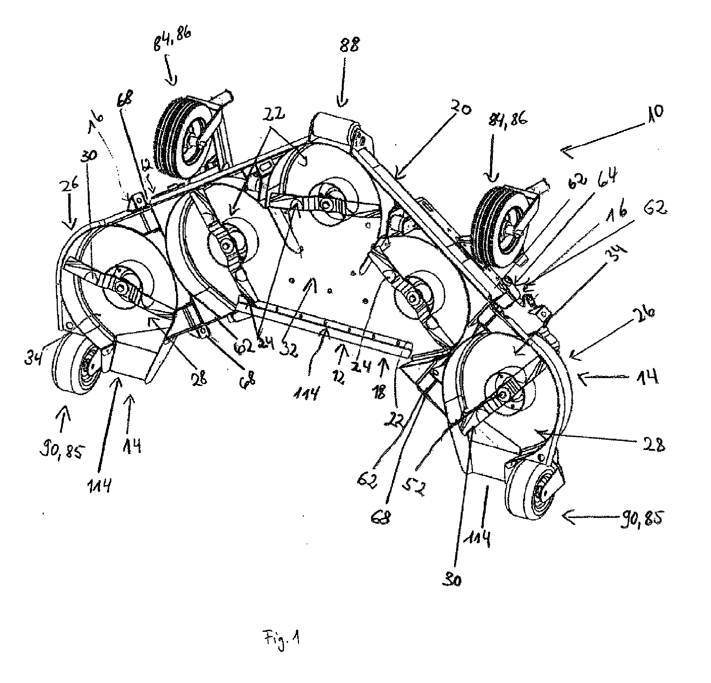

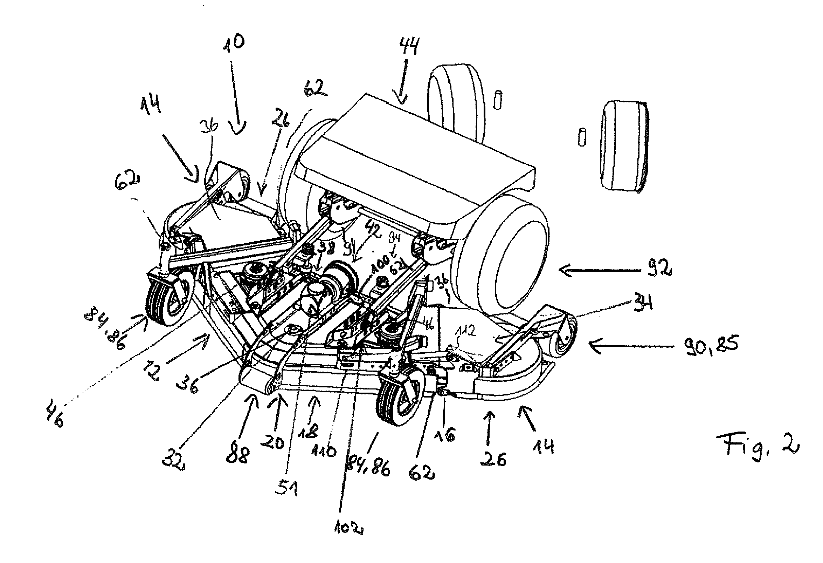

Das in den Fig. 1 und 2 im Ganzen dargestellte Mähdeck 10 weist eine erste Mäheinheit 12 und wenigstens eine zweite Mäheinheit 14 auf, wobei die zweite Mäheinheit 14 mittels einer Doppelgelenkanordnung 16 an der ersten Mäheinheit hochklappbar befestigt ist.

In der gezeigten Ausführungsform ist die erste Mäheinheit ein mittleres oder zentrales Mähdeckelement 18, an dessen beiden Seitenbereichen zwei zweite Mäheinheiten 14 hochklappbar angelenkt sind. Jede zweite Mäheinheit 14 ist mit je einer Doppelgelenkanordnung 16 klappbar an das Mähdeckelement 18 angelenkt. Das Mähdeck 10 ist im Wesentlichen spiegelsymmetrisch zu seiner vertikalen in Fahrtrichtung entsprechende Mittellängsebene ausgebildet, so dass sich die beiden zweiten Mäheinheiten 14 spiegelbildlich entsprechen und nur eine der beiden zweiten Mäheinheiten im Einzelnen beschrieben ist.

Das Mähdeckelement 18 weist ein erstes Mähgehäuse 20 auf, welches eine Mehrzahl von ersten Schneidkammern oder ersten Mähkammern 22 beherbergt, in denen jeweils eines von mehreren ersten Schneidmessern rotiert.

Die zweiten Mäheinheiten 14 weisen jeweils ein zweites Mähgehäuse 26 auf, die in der dargestellten Ausführungsform jeweils eine zweite Mähkammer 28 definieren, innerhalb der sich jeweils ein zweites Schneidmesser 30 dreht.

In nicht näher dargestellten weiteren möglichen Ausgestaltungen beinhaltet auch wenigstens eines der zweiten Mähgehäuse 26 eine Mehrzahl von zweiten Mähkammern 28, wobei sich jeweils ein zweites Schneidmesser in jeder zweiten Mähkammer 28 dreht.

Die Mähgehäuse 20, 26 weisen jeweils eine obere Gehäusewand 32, 34 auf, die die jeweiligen Mähkammern 22, 28 oben begrenzen. Oberhalb dieser oberen Gehäusewände 32, 34 befinden sich unterhalb von Antriebsabdeckungen 36 Antriebe 38, 40 für die Mäheinheiten 12, 14. Ein erster Antrieb 38 der ersten Mäheinheit 12 ist dabei über einen Zapfwellenanschluss 42 an einen (nicht dargestellten) Nebenantrieb eines in Fig. 2 angedeuteten Fahrzeugs 44 anschließbar. Jede zweite Mäheinheit 14 weist einen zweiten Antrieb 40 auf, der jeweils mittels einer Kupplung 46 an den ersten Antrieb 38 zuschaltbar anschließbar ist.

Die Antriebe 38, 40 sind jeweils als Keilriemenantriebe 48 ausgebildet. Demnach weist eine den ersten Antrieb 38 und den zweiten Antrieb 40 beinhaltende Antriebseinrichtung 50 des Mähdecks 10 jeweils ein Zugmittelgetriebe 51 zum Antreiben jeder zweiten Mäheinheit 14 auf, wobei das Zugmittelgetriebe 51 an dem ersten Antrieb 38 der ersten Mäheinheit 12 und an eine Antriebswelle 52 des zweiten Schneidmessers 30 angeschlossen ist.

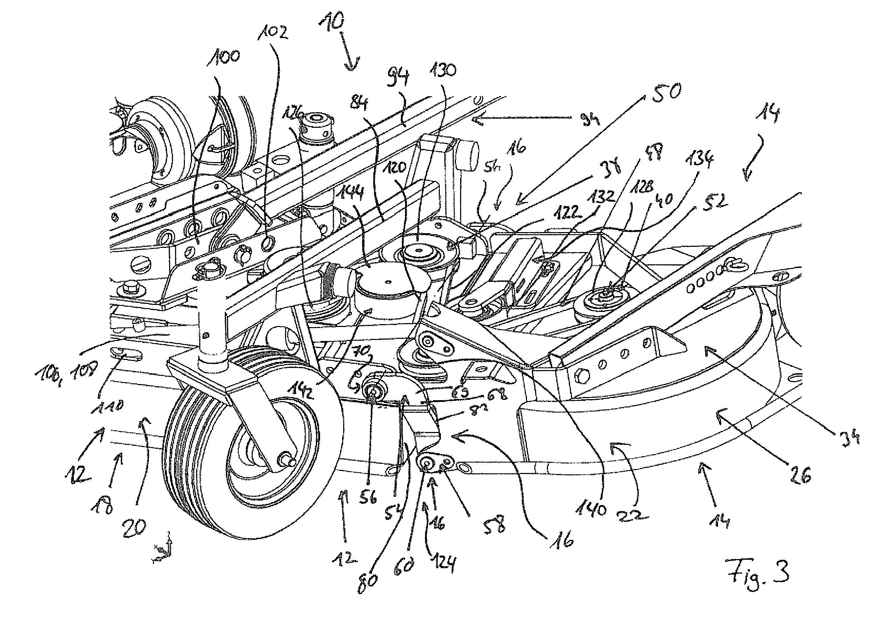

Wie aus Fig. 3 ersichtlich, weist die Doppelgelenkanordnung 16 eine obere Scharniergelenkanordnung 54 zum Verschwenken der zweiten Mäheinheit 14 relativ zu der ersten Mäheinheit 12 um eine obere Schwenkachse 56 und eine untere Scharniergelenkanordnung 58 zum Verschwenken der zweiten Mäheinheit 14 relativ zu der ersten Mäheinheit 12 um eine untere Schwenkachse 60 auf.

Die beiden Schwenkachsen 56, 60 verlaufen im Wesentlichen parallel. In dem gezeigten Ausführungsbeispiel verlaufen die Schwenkachsen 56, 60 in einer horizontal anzuordnenden, schräg zur Fahrtrichtung geneigten Richtung.

Durch einen schrägen Ansatz der zweiten Mäheinheit 14 an der ersten Mäheinheit 12 lässt sich trotz kompakter Anordnung eine Überdeckung der Schnittbreiten des zweiten Schneidmessers 30 zu seitlichen ersten Schneidmessern 24 erreichen.

Die zweite Mäheinheit 14 ist somit mittels des Zugmittelgetriebes 51 angetrieben. Das Zugmittelgetriebe ist beispielsweise als Keilriemenantrieb 48 ausgebildet. In dem dargestellten Ausführungsbeispiel werden sowohl ein Lasttrum 120 als auch ein Leertrum 122 des Zugmittelgetriebes 51 über die Trennstelle zwischen der ersten Mäheinheit 10 und der zweiten Mäheinheit 14 geführt. Demnach ist das Zugmittelgetriebe 51 durch ein an der ersten Mäheinheit 12 angeordnetes Antriebsrad 126 angetrieben und treibt ein auf der zweiten Mäheinheit 14 sitzendes Abtriebsrad 128 an, um so das Schneidmesser der zweiten Mäheinheit 14 anzutreiben. Das Zugmittelgetriebe 51 ist hierzu auf Höhe der oberen Schwenkachse 56 geführt. Hierzu ist eines der Trume 120, 122 über eine erste Umlenkrolle 130 an der ersten Mäheinheit 12 schräg zu der oberen Schwenkachse 56 verlaufend zu einer zweiten Umlenkrolle 132 geführt, um dann zu dem Abtriebsrad 128 zu laufen. Die erste Umlenkrolle 130 und die zweite Umlenkrolle 132 sind in Richtung der oberen Schwenkachse 56 versetzt zueinander angeordnet, so dass das dadurch geführte Trum 130 schräg zu der Schwenkachse 56, diese kreuzend verläuft. Mit anderen Worten fällt eine Richtungskomponente des Trums 120 mit der Schwenkachse 56 zusammen. Der Verlauf des Trums ist dabei derart gewählt, dass das Trum mehr zu der Schwenkachse 56 als senkrecht dazu geneigt verläuft. Die zweite Umlenkrolle 132 ist als glatte Rolle ausgeführt und an einem linearen Riemenspanner 134 angeordnet, um das entsprechende Trum 120 zu spannen.

Das andere Trum 122 ist von dem Abtriebsrad 128 kommend auf einer dritten Umlenkrolle 140 auf der zweiten Mäheinheit 14 in entsprechender paralleler Weise zu dem anderen Trum 120 zu einer vierten Umlenkrolle 142 auf der ersten Mäheinheit 12 geführt, um dann zurück zu dem Antriebsrad 126 zu laufen. Hierbei ist die auf der ersten Mäheinheit 12 gelagerte vierte Umlenkrolle 152 glatt ausgeführt und weist ein Führungsblech 144 zur Begrenzung der Führung auf, während die auf der zweiten Mäheinheit 14 gelagerte dritte Umlenkrolle 140 als Keilriemenrolle zur exakten seitlichen Führung des Trums 122 ausgebildet ist. Auch die dritte Umlenkrolle 140 und die vierte Umlenkrolle 142 sind in Richtung der Schwenkachse 56 versetzt zueinander, so dass auch das andere Trum 122 schräg zur Schwenkachse 56, diese kreuzend verläuft.

Aufgrund der Führung der Trume 120, 122 auf Höhe der oberen Schwenkachse lassen sich beide Stücke des Zugmittels annähernd auf Ebene der Schwenkachse halten und werden auch bei Hochschwenken der zweiten Mäheinheit 14 relativ zu der ersten Mäheinheit 12 nicht höher belastet, sondern nur in sich verdrillt. Eine geringere Belastung lässt sich dadurch erreichen, dass die Trume 120, 122 mehr schräg zur Schwenkachse hin gehalten werden, so dass das Zugmittel nur geringe Belastung zur Seite hin erfährt. Dadurch lässt sich ein Zugmittelgetriebe 51 realisieren, welches auch bei häufigem Hochschwenken der zweiten Mäheinheit 14 kaum Belastungen erfährt und somit sehr langlebig ausgebildet sein kann.

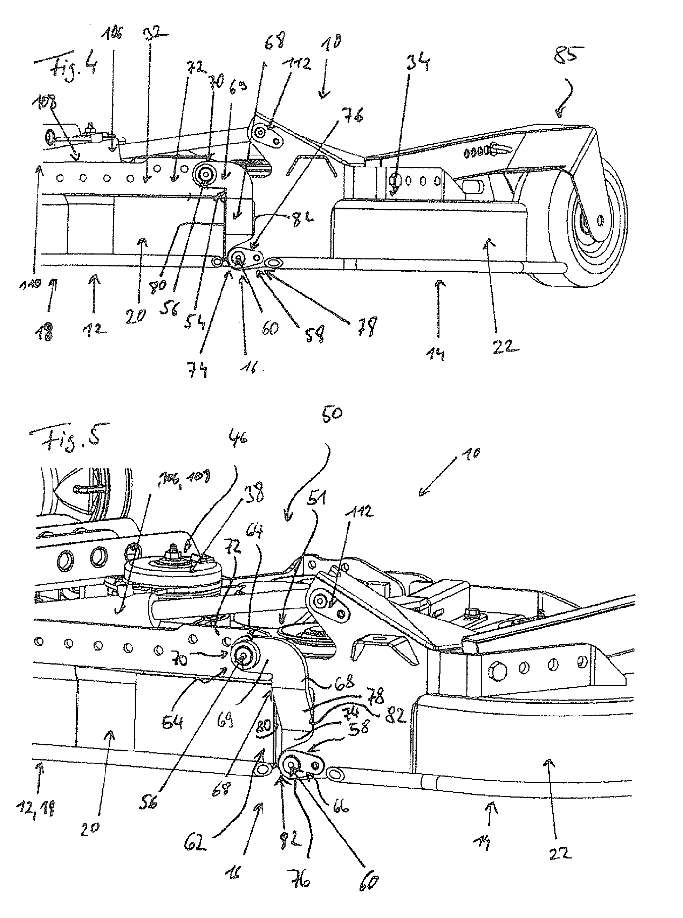

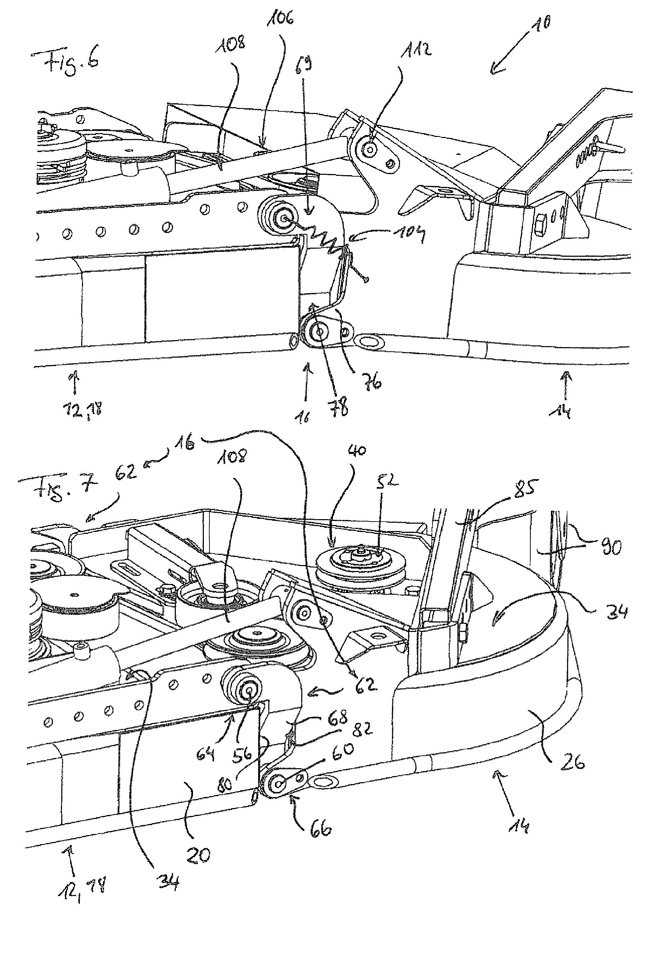

Wie aus den Fig. 4 bis 7 ersichtlich, fallen in einer ersten Position, die ein Verfahren des Mähdecks 10 über einen ebenen Boden darstellt, die Schnittebenen der ersten Schneidmesser 24 mit den Schnittebenen der zweiten Schneidmesser 30 zusammen. Die untere Schwenkachse 60 verläuft innerhalb dieser alle Schneidmesser 24, 30 beinhaltenden Schnittebene; d.h. genauer etwa auf Höhe dieser Schnittebene oder nur leicht nach oben oder nach unten versetzt hierzu.

Die obere Schwenkachse 56 verläuft in etwa auf Höhe der oberen Gehäusewände 32, 34 oder leicht oberhalb dieser oberen Gehäusewände 32, 34. Somit sind die Schwenkachsen 56, 60 in Höhenrichtung versetzt zueinander.

In einer vertikalen Ebene durch die Doppelgelenkanordnung 16 fallen die Schwenkachsen 56, 60 fast zusammen; wie aus Fig. 4 ersichtlich ist, ist die untere Schwenkachse 60 nur leicht zur Seite hin gegenüber der oberen Schwenkachse 56 versetzt angeordnet; das Maß dieser seitlichen Versetzung ist wesentlich geringer als das Maß der Versetzung in Höhenrichtung.

Wie aus Fig. 1 ersichtlich, weist die Doppelgelenkanordnung 16 mehrere in Schwenkachsrichtung versetzt zueinander angeordnete Doppelgelenke 62 auf, die jeweils ein oberes Scharniergelenk 64 und ein unteres Scharniergelenk 66 und einen Lenker 68 dazwischen aufweisen.

Wie am besten aus Fig. 4 ersichtlich, ist der Lenker 68 winkelförmig mit einem ersten Schenkel 69 und einem zweiten Schenkel 78 ausgebildet und mit einem ersten Ende 70 an einem Rahmenelement oder Gehäuseelement 72 schwenkbar gelagert, so dass die Lagerachse die obere Schwenkachse 56 bildet. Das zweite Ende 74 des Lenkers 68 ist zwischen zwei Gelenkvorsprüngen 76 schwenkbar gelagert, welche Gelenkvorsprünge 76 einstückig mit einer Gehäusewandung des zweiten Mähgehäuses 28 ausgebildet sind. Die Lagerachse der Lagerung dieses zweiten Endes 74 bildet die untere Schwenkachse 60.

Durch einen Anschlag eines das zweite Ende 74 tragenden zweiten Schenkels 78 des Lenkers 68 an dem ersten Mähgehäuse 20 ist ein erster Anschlag 80 gebildet, der eine Schwenkbewegung der Doppelgelenkanordnung 16 um die obere Schwenkachse 56 in einer ersten Schwenkrichtung (im Uhrzeigersinn in Fig. 4 gesehen) begrenzt.

Durch Anlage des zweiten Mähgehäuses 26 an dem zweiten Schenkel 78 des Lenkers 68 ist ein zweiter Anschlag 82 gebildet, der eine Verschwenkung um die untere Scharnierachse 60 in einer zweiten Schwenkrichtung, die entgegengerichtet zu der ersten Schwenkrichtung ist, begrenzt. Die zweite Schwenkrichtung wäre in Fig. 4 gesehen die Gegenuhrzeigerrichtung.

Wie aus Fig. 1 und Fig. 2 ersichtlich, weist die erste Mäheinheit 12 ein erstes Fahrwerk 84 mit vorderen Tasträdern 86 und einer vorderen Tastrolle 88 auf, mit denen der Abstand des Mähdecks 10 und insbesondere der ersten Mäheinheit 12 zum Boden aufrecht erhalten wird.

Die beiden zweiten Mäheinheiten 14 weisen jeweils ein zweites Fahrwerk 85 mit seitlich an diesen Außeneinheiten 14 angebrachten Kunststoff-Rädern - hintere Räder 90 - auf, mit denen sich die zweiten Mäheinheiten 14 auf dem Boden abstützen.

Bei der gezeigten Ausführungsform sind die vorderen Tasträder 86 um Hochachsen schwenkbar, um Lenkbewegungen des Fahrzeuges (siehe Fig. 2) zu folgen. Die hinteren Räder 90 der zweiten Mäheinheiten sind hinsichtlich ihrer Richtung starr an den Mäheinheiten befestigt und sind durch ihre hintere Anordnung näher zu Fahrzeugrädern 92 angeordnet.

In Fig. 2 ist dabei eine Frontanlenkung an ein Fahrzeug 44 angedeutet, dessen Hinterräder lenkbar ausgebildet sind. Für die Frontanlenkung an dem Fahrzeug 44 weist die erste Mäheinheit 12 auf ihrer Oberseite eine Fahrzeuganlenkeinrichtung 100 mit mehreren Befestigungsöffnungen 102 auf. Daran lässt sich beispielsweise ein Frontlenker 94 des Fahrzeugs 44 befestigen.

Es ist auch eine Mittenbefestigung im mittleren Bereich eines beispielsweise frontseitig gelenkten Fahrzeuges (nicht dargestellt) denkbar und möglich.

Die Fig. 4 bis 7 zeigen die Situation beim Verfahren über einen ebenen Boden. Die Mäheinheiten 12, 14 sind gerade zueinander ausgerichtet, wobei der Lenker 78 mit beiden Anschlägen 80, 82 in Anschlag ist.

Wie in Fig. 4 angedeutet, kann eine Vorspanneinrichtung 104 vorgesehen sein, um die Doppelgelenkanordnung 16 in einen der Anschläge 80, 82, hier insbesondere in Anlage an den ersten Anschlag 80, vorzuspannen. Die Vorspanneinrichtung 104 ist insbesondere zur Gegenwirkung gegen eine Spannung des Zugmittels des Zugmittelgetriebes 51 vorgesehen, um zu vermeiden, dass eine solche Zugmittelspannung des Zugmittelgetriebes 51 ein ungewolltes Hochklappen der zweiten Mäheinheit 14 bewirkt und die Mäheinheit 14 hierdurch vom Boden abhebt.

Das Mähdeck 10 weist für jede zweite Mäheinheit 14 ein Betätigungselement 106 auf, mit dem jedoch ein solches Hochklappen gewollt zu Transportzwecken bewerkstelligbar ist. Insbesondere weist das Betätigungselement 106 als Verlagerungseinrichtung einen Teleskopzylinder 108 auf, der mit einer ersten Anlenkung 110 an der ersten Mäheinheit 12 angreift und mit einer zweiten Anlenkung 112 an der zweiten Mäheinheit 14 angreift. Indem in den Fig. 4 bis 11 dargestellten Mähbetrieb lässt der Teleskopzylinder 108 ein Spiel zu, so dass die zweite Mäheinheit relativ zu der ersten Mäheinheit um einen begrenzten Bereich verschwenkbar ist. Ein solches Spiel lässt sich beispielsweise durch eine Langlochanbindung an einer der beiden Anlenkungen 110, 112 erreichen. Beispielsweise beträgt der mögliche Schwenkbereich 7 bis 10 Grad. Der Teleskopzylinder 108 ist dazu ausgebildet, die relative Lage der Anlenkungen 110, 112 zu verändern, um die zweite Mäheinheit 14 bei Bedarf hoch- oder herunterzuklappen.

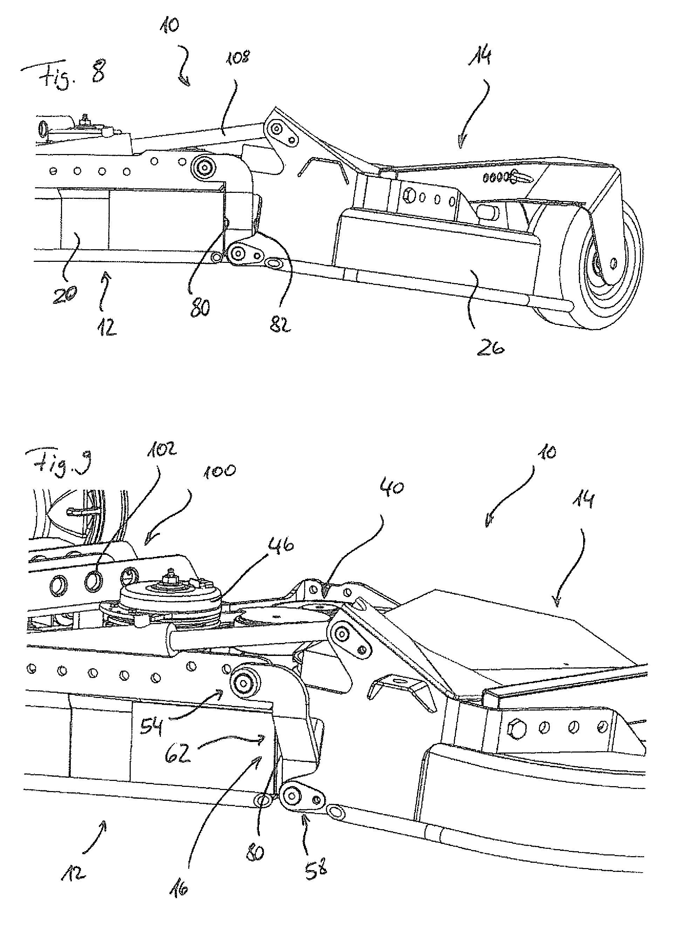

Fig. 8 zeigt eine Situation im Mähbetrieb, bei der ein Bodenbereich seitlich von der ersten Mäheinheit 12 gegenüber dem von der ersten Mäheinheit 12 überfahrenen Bodenbereich abfällt. Die gleiche Situation ist in Fig. 9 perspektivisch dargestellt. Wie aus den Fig. 8 und 9 ersichtlich, verschwenkt sich dabei die zweite Mäheinheit relativ zu der ersten Mäheinheit um die untere Schwenkachse 60. Diese Bodenanpassung wird über das Spiel im Betätigungselement 106 ermöglicht.

Der Lenker 68 bleibt in Anlage an den ersten Anschlag 80. Durch die Verschwenkung um eine Schwenkachse 60 innerhalb der Schneidmesserebene lässt sich eine optimale Bodenanpassung mit dicht über dem Boden geführten Schneidmessern erreichen.

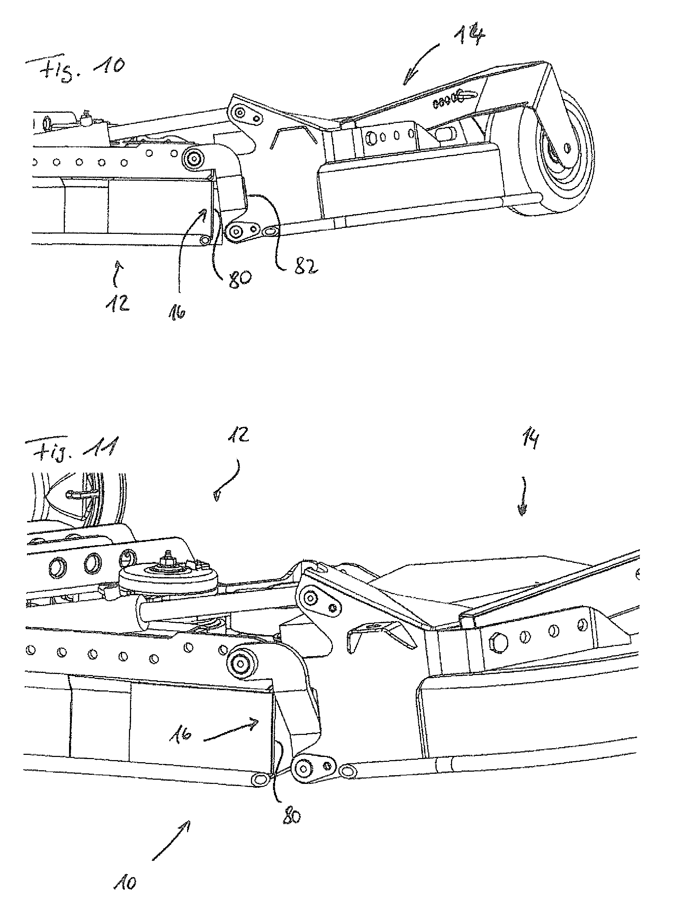

Die Fig. 10 und 11 zeigen eine Situation, bei der ein Bodenbereich seitlich von der ersten Mäheinheit 12 ansteigt. Dementsprechend wird die zweite Mäheinheit 14 geführt über die hinteren Räder 90 gegenüber der ersten Mäheinheit 12 etwas nach oben geklappt.

Dabei bleibt der Lenker 68 in seinem Anschlag an dem zweiten Anschlag 82, so dass die Verschwenkung nicht um die untere Schwenkachse 60 herum, sondern um die obere Schwenkachse 56 herum erfolgt.

Hierdurch ist eine Verschwenkung nach oben möglich, wobei dennoch die Mäheinheiten 12, 14 im Normalbetrieb über ebenem Boden sehr dicht zueinander angeordnet werden können und somit in einfacher Weise eine ordentliche Überdeckung in der Schnittbreite der Schneidmesser erreichbar ist.

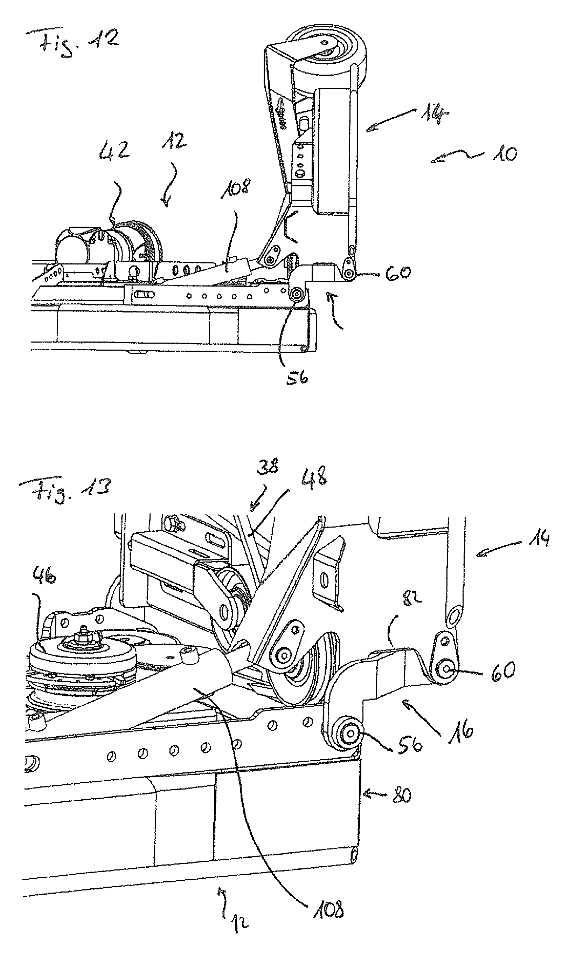

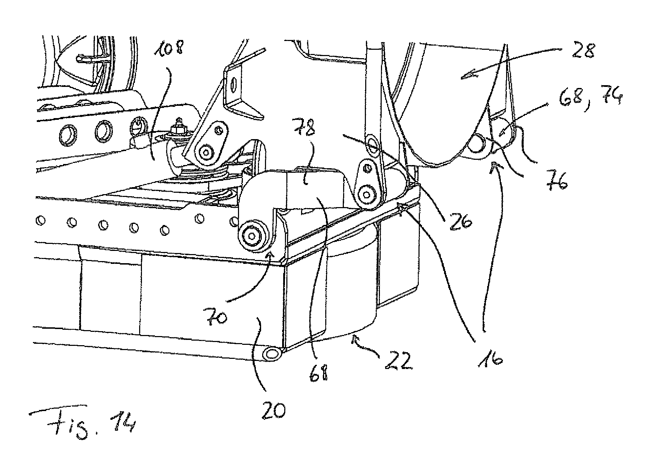

Die Fig. 12 bis 14 zeigen die hochgeklappte Stellung; hierzu wird der Teleskopzylinder 108 eingefahren, so dass sich die zweite Anlenkung 112 hin zu der ersten Anlenkung 110 bewegt. Sobald das beispielsweise über ein Langloch in einer der Anlenkungen 110, 112 gebildete Spiel überwunden ist, greift die entsprechende Anlenkung und zieht die zweite Mäheinheit 14 nach oben, wobei die Verschwenkung um die obere Schwenkachse 56 herum erfolgt.

In der so hochgeklappten Stellung lässt sich eine Transportbreite erreichen, die gegenüber der Gesamtarbeitsbreite des Mähdecks 10 wesentlich verringert ist.

Das in den dargestellten Figuren abgebildete Ausführungsbeispiel des Mähdecks 10 weist ein Fünf-Messer-Mähwerk auf, wobei die erste Mäheinheit 12 eine mittige starre Einheit mit drei Messerkreiseln und einer Arbeitsbreite von beispielsweise 1 bis 1,8 m, vorzugsweise 1,4 m, ist. Die erste Mäheinheit 14 ist vorzugsweise in sich geschlossen und ohne seitliche Öffnung ausgebildet. Insofern könnte das Mähdeck 10 auch mit hochgeklappten seitlichen Mäheinheiten 14 betrieben werden, falls beispielsweise eine Rasenfläche Begrenzungen aufweist und somit eine geringere Arbeitsbreite erwünscht ist.

Seitlich an dieser starren ersten Mäheinheit 12 sind auf beiden Seiten jeweils die zweiten Mäheinheiten 14 angebracht, die in der gezeigten Ausgestaltung jeweils als Ein-Messer-Einheiten mit einem Schneidmesser 30 ausgebildet sind. Die zweiten Mäheinheiten 14 sind vorzugsweise ebenfalls in sich geschlossen und sind beispielsweise manuell, hydraulisch oder elektrisch einklappbar, um so eine Transportbreite des Mähdecks 10 von wenig mehr als die Arbeitsbreite der mittleren ersten Mäheinheit 12 zu schaffen. Die Transportbreite beträgt beispielsweise 1,2 bis 2 m und vorzugsweise 1,8 m.

Beispielsweise lassen sich Arbeitsbreiten von 2 bis 3 m, insbesondere 2,3 m, bei Transportbreiten von 1 bis 2 m, beispielsweise 1,8 m, erreichen.

Sämtliche Schneidmesser 24, 30 sind vorzugsweise identisch ausgebildet, was die Ersatzteilversorgung erleichtert. Beispielsweise sind Messerkreiseldurchmesser im Bereich von 50 cm ± 20 cm vorgesehen (insbesondere 528 mm).

Der erste Antrieb 38 zum Antreiben der ersten Mäheinheit 12 ist vorzugsweise ein mechanischer Antrieb zum Antreiben der Inneneinheit mit Keilriemen, vorzugsweise mit Aramidzugstrang.

Auch der zweite Antrieb 40, der jeweils bei jeder der zweiten Mäheinheiten 14 vorgesehen ist, ist vorzugsweise ein Keilriemenantrieb 48 mit Keilriemen mit Aramidzugstrang.

Ein Ein- und Ausschalten der ersten Mäheinheit 12 erfolgt z.B. eine mechanische Zapfwelle des Fahrzeugs 44 und ist somit durch Ein- und Ausschalten des Nebenantriebs des Fahrzeugs 44 zu schalten.

Über die jeweilige Kupplung 46 lässt sich jede der zweiten Mäheinheiten 14 unabhängig voneinander zuschalten oder abschalten. Die Kupplungen 46 sind vorzugsweise jeweils als elektromagnetische Kupplung mit Bremse für einen schnellen Messerstillstand ausgebildet. Mit der Bremse lässt sich beispielsweise ein Messerstillstand innerhalb einer Bremslänge von 15 Grad erreichen.

Eine Bodenanpassung der Außeneinheiten - zweite Mäheinheiten 14 - erfolgt z.B. über ein Spiel in einer Anlenkung des Betätigungselements 106, welche zum Betätigen der Klappbewegung vorgesehen ist. Über dieses Spiel lässt sich auch eine Begrenzung der maximal zulässigen Schwenkbewegung der zweiten Mäheinheiten 14 beim Mähbetrieb erreichen. Die Bodenanpassung der zweiten Mäheinheit 14 erfolgt nach unten über einen Drehpunkt auf der Schneidmesserebene und nach oben über einen oberen Drehpunkt im Bereich einer Oberseite der Mäheinheiten 12, 14. Dieser obere Drehpunkt dient auch für die Einklappung.

Es lässt sich somit ein kompaktes Design zum optimalen Anbau an Frontmäherfahrzeuge mit einer relativ kleinen Leistung, beispielsweise von 35 bis 40 PS, erreichen.

Die erste Mäheinheit 12 ist mit drehbaren vorderen Tasträdern 86 versehen, während die zweite Mäheinheit 14 seitlich angebrachte, nur in der Höhe verstellbare hintere Räder 90 aufweist. Diese hinteren Räder 90 befinden sich etwa auf Höhe der Fahrzeugräder 92.

Die Fahrzeuganschlusseinrichtung 100 ermöglicht einen gegenüber bisherigen hausinternen Lösungen verbreiterten und über Kugelaugen gelagerten Anbau an das Grundfahrzeug 44.

Die Ablage des Schnittguts kann über drei Schnittgutöffnungen 114 erfolgen, die nach Bedarf speziell an das Design des Grundfahrzeuges 44 angepasst werden können.

Die Schnittgutöffnungen 114 ermöglichen eine Einzelablage der linken zweiten Mäheinheit 14, eine Dreifachablage der inneren ersten Mäheinheit 12 und eine Einzelablage der rechten zweiten Mäheinheit 14.

Das Mähdeck 10 kann weiter in der Art, wie dies in der DE 10 2005 050 215 A1 beschrieben ist, auf einen Mulchbetrieb umgerüstet werden, um die erste Mäheinheit 12 zu einer Mulchmähdeckeinheit zu machen. Ein Mulchsystem der zweiten Mäheinheiten 14 kann beispielsweise über zusätzlich angebrachte Ablenkfinger (nicht dargestellt) im Materialstrom erfolgen.

Weiter ist eine nicht näher dargestellte mechanische Verriegelung der eingeklappten seitlichen zweiten Mäheinheiten 14 für eine Transportfahrt vorgesehen.

Bei einer nicht näher dargestellten weiteren Ausführungsform weisen die seitlichen zweiten Mäheinheiten 14 mehrere Messerkreisel, z.B. zwei Messerkreisel anstatt nur einem Messerkreisel, auf. Bei Beibehaltung einer Transportbreite von beispielsweise 1,8 m bekäme man somit z.B. auf eine Schnittbreite von ca. 3,2 m; diese Version ist beispielsweise für Fahrzeuge 44 mit größerer Leistung, z.B. für Schlepper ab 50 PS, geeignet. Auch bei dieser Ausführungsform kann die erste Mäheinheit 12 in der dargestellten Weise ohne Veränderung verwendet werden, wobei einfach die zweiten Mäheinheiten 14 durch Mehrfachkreiselmäheinheiten (nicht dargestellt) ersetzt werden.

Bei der gezeigten Ausführungsform des Mähdecks 10 sind auf beiden Seiten zweite Mäheinheiten 14 vorgesehen. Bei einer nicht näher dargestellten weiteren Ausgestaltung ist aber auch eine asymmetrische Ausführung des Mähwerks möglich, wobei an die erste Mäheinheit 12 z.B. nur eine seitliche zweite Mäheinheit 14 angebracht ist. Die erste Mäheinheit 12 ist vorzugsweise mit einer Arbeitsbreite versehen, die die Spurbreite des Fahrzeuges 44 überdeckt. Dadurch kann man auch bei nur einer seitlichen zweiten Mäheinheit 14 spurüberdeckend arbeiten (in einer konkreten Ausgestaltung könnte das Mähdeck innen 1,4 m Arbeitsbreite liefern, wobei die Außenbreite der Vorderräder des Fahrzeugs 44 1,3 m bis 1,35 m beträgt).

Zur Reinigung können die zweiten Mäheinheiten 14 hochgeklappt werden und so einfach beispielsweise mit einem Wasserschlauch abgespritzt werden. Die erste Mäheinheit kann mit nicht näher dargestelltem Anschlussstutzen für einen Wasserschlauch versehen sein, um so die innere Mäheinheit 12 einfach zu reinigen.

Bei Frontmäherfahrzeugen mit geringer Hubkraft könnte noch ein zusätzliches Fahrwerk (nicht näher dargestellt) vorgesehen werden, an dem das Mähdeck 10 aufgehängt wird, um so die Frontanlenkung zu entlasten.

### Bezugszeichenliste:

- 10: Mähdeck
- 12: erste Mäheinheit
- 14: zweite Mäheinheit
- 16: Doppelgelenkanordnung
- 18: zentrales Mähdeckelement
- 20: erstes Mähgehäuse
- 22: erste Mähkammer
- 24: erste Schneidmesser
- 26: zweites Mähgehäuse
- 28: zweite Mähkammer
- 30: zweites Schneidmesser
- 32: erste obere Gehäusewand
- 34: zweite obere Gehäusewand
- 36: Antriebsabdeckung
- 38: erster Antrieb
- 40: zweiter Antrieb
- 42: Zapfwellenanschluss
- 44: Fahrzeug
- 46: Kupplung
- 48: Keilriemenantrieb
- 50: Antriebseinrichtung
- 51: Zugmittelgetriebe
- 52: Antriebswelle des zweiten Schneidmessers
- 54: obere Scharniergelenkanordnung
- 56: obere Schwenkachse
- 58: untere Scharniergelenkanordnung
- 60: untere Schwenkachse
- 62: Doppelgelenk
- 64: oberes Scharniergelenk
- 66: unteres Scharniergelenk
- 68: Lenker
- 69: erster Schenkel des Lenkers
- 70: erstes Ende
- 72: Gehäuseelement
- 74: zweites Ende
- 76: Gelenkvorsprung
- 78: zweiter Schenkel des Lenkers
- 80: erster Anschlag
- 82: zweiter Anschlag
- 84: erstes Fahrwerk
- 85: zweites Fahrwerk
- 86: vordere Tasträder
- 88: vordere Tastrolle
- 90: hintere Räder
- 92: Fahrzeugräder
- 94: Frontlenker
- 100: Fahrzeuganlenkungseinrichtung
- 102: Befestigungsöffnungen
- 104: Vorspanneinrichtung
- 106: Betätigungselement
- 108: Teleskopzylinder
- 110: erste Anlenkung
- 112: zweite Anlenkung
- 114: Schnittgutöffnung
- 120: Lasttru m
- 122: Leertrum
- 124: Trennstelle
- 126: Antriebsrad
- 128: Abtriebsrad
- 130: erste Umlenkrolle
- 132: zweite Umlenkrolle
- 134: linearer Riemenspanner
- 140: dritte Umlenkrolle
- 142: vierte Umlenkrolle
- 144: Führungsblech

## Patentansprüche

1. Mähdeck (10) mit einer ersten Mäheinheit (12) und einer zweiten Mäheinheit (14), wobei die zweite Mäheinheit (14) an der ersten Mäheinheit (12) mittels einer Doppelgelenkanordnung (16) hochklappbar befestigt ist.

2. Mähdeck (10) nach Anspruch 1,
**dadurch gekennzeichnet,**
**dass** die erste Mäheinheit (12) ein erstes Mähgehäuse (20) mit einer Fahrzeuganlenkungseinrichtung (100) zur Befestigung an einem Fahrzeug (44) aufweist, wobei die zweite Mäheinheit (14) ein zweites Mähgehäuse (26) aufweist, das mittels der Doppelgelenkanordnung (16) abklappbar an dem ersten Mähgehäuse (20) angelenkt ist.

3. Mähdeck (10) nach einem der voranstehenden Ansprüche,
**dadurch gekennzeichnet,**
**dass** eine Antriebseinrichtung (50) des Mähdecks (10) ein Zugmittelgetriebe (51) zum Antreiben der zweiten Mäheinheit (14) aufweist, das sich von der ersten Mäheinheit (12) zu der zweiten Mäheinheit (14) erstreckt.

4. Mähdeck (10) nach einem der voranstehenden Ansprüche,
**dadurch gekennzeichnet,**
**dass** die Doppelgelenkanordnung (16) eine obere Scharniergelenkanordnung (54) zum Verschwenken der zweiten Mäheinheit (14) relativ zu der ersten Mäheinheit (12) um eine obere, vorzugsweise in einer horizontalen Richtung verlaufenden, Schwenkachse (56) und eine untere Scharniergelenkanordnung (58) zum Verschwenken der zweiten Mäheinheit (14) relativ zu der ersten Mäheinheit (12) um eine untere, vorzugsweise in einer horizontalen Richtung verlaufende, Schwenkachse (60) aufweist, wobei die Schwenkachsen (56, 60) im Wesentlichen parallel verlaufen, wobei ein erster Anschlag (80) zum Begrenzen der Verschwenkbewegung um die obere Schwenkachse (56) in einer ersten Schwenkrichtung und ein zweiter Anschlag (82) zum Verschwenken der Verschwenkbewegung um die untere Schwenkachse (60) in einer zu der ersten Schwenkrichtung entgegengerichteten zweiten Schwenkrichtung vorgesehen sind.

5. Mähdeck (10) nach Anspruch 4,
**dadurch gekennzeichnet,**
**dass** die Doppelgelenkanordnung (16) durch eine Vorspanneinrichtung (104) in Anlage gegen wenigstens einen der Anschläge (80, 82), vorzugsweise in Anlage gegen den ersten Anschlag (82), vorgespannt ist.

6. Mähdeck (10) nach einem der Ansprüche 4 oder 5,
**dadurch gekennzeichnet,**
**dass** die Doppelgelenkanordnung (16) mehrere in Schwenkachsrichtung gesehen mit Abstand zueinander angeordnete Doppelgelenke (62) aufweist, die jeweils mit einem oberen und einem unteren Scharniergelenk (64, 66) versehen sind, so dass die Mehrzahl der Scharniergelenke (64, 66) die jeweilige Scharniergelenkanordnung (54, 58) bilden, wobei die Scharniergelenke (64, 66) jedes Doppelgelenks jeweils durch einen Lenker (68) verbunden sind.

7. Mähdeck (10) nach einem der voranstehenden Ansprüche,
**dadurch gekennzeichnet,**
**dass** die erste Mäheinheit (12) wenigstens ein um eine erste Hochachse drehbar gelagertes erstes Schneidmesser (24) aufweist und dass die zweite Mäheinheit (14) wenigstens ein um eine zweite Hochachse drehbar gelagertes zweites Schneidmesser (30) aufweist, wobei die Schneidmesser (24, 30) im Wesentlichen in einer gemeinsamen Schneidebene rotieren, wobei eine untere Schwenkachse (60) der Doppelgelenkanordnung (16) in der oder im Nahbereich der Schneidebene angeordnet ist.

8. Mähdeck (10) nach Anspruch 7 und nach Anspruch 2,
**dadurch gekennzeichnet,**
**dass** die Mähgehäuse (20, 26) jeweils eine obere Gehäusewand (32, 34) zum oberen Abschließen von Mähkammern aufweisen, wobei eine im Wesentlichen parallel zur unteren Schwenkachse (60) verlaufende obere Schwenkachse (56) der Doppelgelenkanordnung (16) sich auf Höhe der oberen Gehäusewand (32, 34) oder oberhalb der oberen Gehäusewand (32, 34) erstreckt.

9. Mähdeck (10) nach einem der voranstehenden Ansprüche,
**dadurch gekennzeichnet,**
**dass** die Doppelgelenkanordnung (16) zwei Schwenkachsen (56, 60) definiert, die sowohl in Höhenrichtung des Mähdecks (10) als auch in einer quer zu den Schwenkachsen (56, 60) verlaufenden seitlichen Richtung versetzt zueinander angeordnet sind, wobei die Schwenkachsen (56, 60) in Höhenrichtung des Mähdecks (10) weiter voneinander entfernt sind als in der seitlichen Richtung.

10. Mähdeck (10) nach einem der voranstehenden Ansprüche,
**dadurch gekennzeichnet,**
**dass** die erste Mäheinheit (12) ein mittleres Mähdeckelement (18) mit einer Mehrzahl von rotierenden ersten Schneidmessern (24) ist,
**dass** an zwei gegenüberliegenden Seiten des mittleren Mähdeckelements (18) jeweils eine zweite Mäheinheit (14) hochklappbar an dem mittleren Mähdeckelement (18) angebracht ist.

11. Mähdeck (10) nach einem der voranstehenden Ansprüche,
**dadurch gekennzeichnet,**
**dass** oberhalb der Doppelgelenkanordnung (16) ein Betätigungselement (106) zur Betätigung einer Klappbewegung zwischen den Mäheinheiten (12, 14) angreift, das eine an der ersten Mäheinheit (12) angreifende erste Anlenkung (110) und eine an der zweiten Mäheinheit (14) angreifende zweite Anlenkung (112) und eine Verlagerungseinrichtung (108) zur vorzugsweise angetriebenen Relativverlagerung der Anlenkungen aufweist, wobei das Betätigungselement bzw. die Verlagerungseinrichtung vorzugsweise als Teleskoparm oder Teleskopzylinder (108) ausgebildet ist.

12. Mähdeck (10) nach einem der voranstehenden Ansprüche,
**dadurch gekennzeichnet,**
**dass** die erste Mäheinheit (12) einen an einen Nebenantrieb eines Fahrzeugs (44), an das das Mähdeck (10) anzuschließen ist, anschließbaren ersten Antrieb (38) aufweist und dass die zweite Mäheinheit (14) einen mittels einer schaltbaren Kupplung (46) an den ersten Antrieb (38) anzukuppelnden zweiten Antrieb (40) aufweist.

13. Mähdeck (10) nach einem der voranstehenden Ansprüche,
**dadurch gekennzeichnet,**
**dass** die zweite Mäheinheit (14) mittels eines Zugmittelgetriebes (51) angetrieben ist, welches ein an der ersten Mäheinheit (12) angeordnetes Antriebsrad und ein an der zweiten Mäheinheit (14) angeordnetes Abtriebsrad aufweist, wobei wenigstens ein Trum des Zugmittels des Zugmittelgetriebes auf Höhe einer Schwenkachse des Doppelgelenks geführt ist.

14. Mähdeck (10) nach Anspruch 13,
**dadurch gekennzeichnet,**
**dass** das wenigstens eine Trum die obere Schwenkachse des Doppelgelenks schräg kreuzt, so dass eine Richtungskomponente des Trums und der Schwenkachse zusammenfällt.

15. Mähdeck (10) nach Anspruch 13 oder 14,
**dadurch gekennzeichnet,**
**dass** sowohl ein Lasttrum als auch ein Leertrum des Zugmittelgetriebes durch in Schwenkachsrichtung jeweils versetzt zueinander angeordnete Umlenkrollen auf Höhe der Schwenkachse, schräg zu dieser verlaufend über die Trennstelle zwischen erster und zweiter Mäheinheit geführt sind.
